# EUROPEAN PATENT SPECIFICATION

(11) **EP 4 481 574 B1**
(45) Date of publication and mention of the grant of the patent: **31.12.2025**
(21) Application number: 23211357.1
(22) Date of filing: 22.11.2023
(51) Int. Cl.: G06F 12/0811, G06F 12/084, G06F 12/14, G06F 12/0846, G06F 12/0855, G06F 12/0842, G06F 12/0864, G06F 12/0831, G06F 12/126

(54) **APPARATUS AND METHOD FOR SECURE RESOURCE ALLOCATION**
VORRICHTUNG UND VERFAHREN ZUR SICHEREN RESSOURCENZUWEISUNG
APPAREIL ET PROCÉDÉ D'ATTRIBUTION DE RESSOURCES SÉCURISÉE

(30) Priority: 22.06.2023 US 202318213189
(43) Date of publication of application: 25.12.2024
(73) Proprietor: INTEL Corporation, Santa Clara, CA 95054 (US)
(72) Inventor: Liu, Fangfei, Hillsboro OR, 97124 (US); Rozas, Carlos, Portland OR, 97229 (US); Unterluggauer, Thomas, 9580 Villach Carinthia (AT); Constable, Scott, Portland OR, 97229 (US)
(74) Representative: Samson & Partner Patentanwälte mbB

(56) References cited:
- WO-A1-2020/000344
- US-A1- 2020 136 943
- LIU FANGFEI ET AL: "CATalyst: Defeating last-level cache side channel attacks in cloud computing", 2016 IEEE INTERNATIONAL SYMPOSIUM ON HIGH PERFORMANCE COMPUTER ARCHITECTURE (HPCA), IEEE, 12 March 2016 (2016-03-12), pages 406 - 418, XP032888467, DOI: 10.1109/HPCA.2016.7446082
- OMAR HAMZA ET AL: "IRONHIDE: A Secure Multicore that Efficiently Mitigates Microarchitecture State Attacks for Interactive Applications", 2020 IEEE INTERNATIONAL SYMPOSIUM ON HIGH PERFORMANCE COMPUTER ARCHITECTURE (HPCA), IEEE, 22 February 2020 (2020-02-22), pages 111 - 122, XP033755288, DOI: 10.1109/HPCA47549.2020.00019

## Description

### BACKGROUND

### Field of the Invention

This invention relates generally to the field of computer processors. More particularly, the invention relates to an apparatus and method for secure resource allocation.

### Description of the Related Art

An instruction set, or instruction set architecture (ISA), is the part of the computer architecture related to programming, including the native data types, instructions, register architecture, addressing modes, memory architecture, interrupt and exception handling, and external input and output (I/O). It should be noted that the term "instruction" generally refers herein to macro-instructions - that is instructions that are provided to the processor for execution - as opposed to micro-instructions or micro-ops - that is the result of a processor's decoder decoding macro-instructions. The micro-instructions or micro-ops can be configured to instruct an execution unit on the processor to perform operations to implement the logic associated with the macro-instruction.

The ISA is distinguished from the microarchitecture, which is the set of processor design techniques used to implement the instruction set. Processors with different microarchitectures can share a common instruction set. For example, Intel^{®} Pentium 4 processors, Intel@ Core^{™} processors, and processors from Advanced Micro Devices, Inc. of Sunnyvale CA implement nearly identical versions of the x86 instruction set (with some extensions that have been added with newer versions), but have different internal designs. For example, the same register architecture of the ISA may be implemented in different ways in different microarchitectures using well-known techniques, including dedicated physical registers, one or more dynamically allocated physical registers using a register renaming mechanism (e.g., the use of a Register Alias Table (RAT), a Reorder Buffer (ROB) and a retirement register file). Unless otherwise specified, the phrases register architecture, register file, and register are used herein to refer to that which is visible to the software/programmer and the manner in which instructions specify registers. Where a distinction is required, the adjective "logical," "architectural," or "software visible" will be used to indicate registers/files in the register architecture, while different adjectives will be used to designate registers in a given microarchitecture (e.g., physical register, reorder buffer, retirement register, register pool).

US 2020/136943 A1 relates to storage management in a data management platform for cloud-native workloads. For example, the data management platform includes a compute server and a storage server. The storage server manages a plurality of storage devices that are communicatively coupled to the storage server. The compute server and the storage server are communicatively coupled via a network. The plurality of storage devices that are managed by the storage server are disaggregated from the compute server to enable storage capacity of the plurality of storage devices to scale independent of the compute server.

Liu Fangfei et al.: "CATalyst: Defeating last-level cache side channel attacks in cloud computing" concerns LLC side channel attacks and the Intel Cache Allocation Technology (CAT) to provide a system-level protection mechanism to defend from side channel attacks on the shared LLC. For example, CATalyst, a pseudo-locking mechanism which uses CAT to partition the LLC into a hybrid hardware-software managed cache, is described.

### SUMMARY OF THE INVENTION

The present invention is defined in the independent claims. The dependent claims define embodiments thereof.

### BRIEF DESCRIPTION OF THE DRAWINGS

A better understanding of the present invention can be obtained from the following detailed description in conjunction with the following drawings, in which:

A better understanding of the present invention can be obtained from the following detailed description in conjunction with the following drawings, in which:
**FIG. 1** illustrates an example computer system architecture;
**FIG. 2** illustrates a processor comprising a plurality of cores;
**FIG. 3A** illustrates a plurality of stages of a processing pipeline;
**FIG. 3B** illustrates details of one embodiment of a core;
**FIG. 4** illustrates execution circuitry in accordance with one embodiment;
**FIG. 5** illustrates one embodiment of a register architecture;
**FIG. 6** illustrates one example of an instruction format;
**FIG. 7** illustrates addressing techniques in accordance with one embodiment;
**FIG. 8** illustrates one embodiment of an instruction prefix;
**FIGS. 9A-D** illustrate embodiments of how the R, X, and B fields of the prefix are used;
**FIGS. 10A-B** illustrate examples of a second instruction prefix;
**FIG. 11** illustrates payload bytes of one embodiment of an instruction prefix;
**FIG. 12** illustrates instruction conversion and binary translation implementations;
**FIG. 13** illustrates an example set of way masks of a corresponding set of class of service (CLOS) values;
**FIG. 14** illustrates one embodiment of an architecture for securely performing cache reservations;
**FIG. 15** illustrates one embodiment in which duplicate cache lines are included **in** both a reserved cache region and a non-reserved cache region;
**FIG. 16** illustrates way masks with reserved mask bits in accordance with embodiments of the invention; and
**FIG. 17** illustrates a method in accordance with embodiments of the invention.

### DETAILED DESCRIPTION

In the following description, for the purposes of explanation, numerous specific details are set forth in order to provide a thorough understanding of the embodiments of the invention described below.

### Exemplary Computer Architectures

Detailed below are describes of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

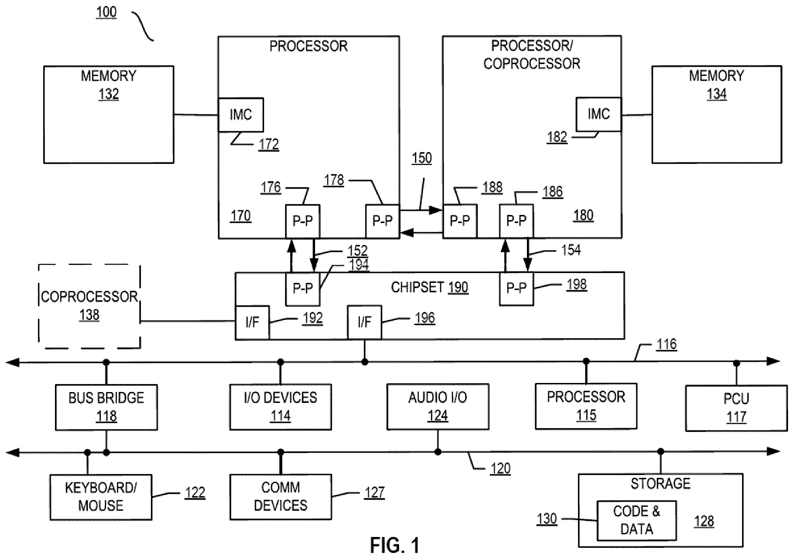

**FIG. 1** illustrates embodiments of an exemplary system. Multiprocessor system 100 is a point-to-point interconnect system and includes a plurality of processors including a first processor 170 and a second processor 180 coupled via a point-to-point interconnect 150. In some embodiments, the first processor 170 and the second processor 180 are homogeneous. In some embodiments, first processor 170 and the second processor 180 are heterogenous.

Processors 170 and 180 are shown including integrated memory controller (IMC) units circuitry 172 and 182, respectively. Processor 170 also includes as part of its interconnect controller units point-to-point (P-P) interfaces 176 and 178; similarly, second processor 180 includes P-P interfaces 186 and 188. Processors 170, 180 may exchange information via the point-to-point (P-P) interconnect 150 using P-P interface circuits 178, 188. IMCs 172 and 182 couple the processors 170, 180 to respective memories, namely a memory 132 and a memory 134, which may be portions of main memory locally attached to the respective processors.

Processors 170, 180 may each exchange information with a chipset 190 via individual P-P interconnects 152, 154 using point to point interface circuits 176, 194, 186, 198. Chipset 190 may optionally exchange information with a coprocessor 138 via a high-performance interface 192. In some embodiments, the coprocessor 138 is a special-purpose processor, such as, for example, a high-throughput MIC processor, a network or communication processor, compression engine, graphics processor, GPGPU, embedded processor, or the like.

A shared cache (not shown) may be included in either processor 170, 180 or outside of both processors, yet connected with the processors via P-P interconnect, such that either or both processors' local cache information may be stored in the shared cache if a processor is placed into a low power mode.

Chipset 190 may be coupled to a first interconnect 116 via an interface 196. In some embodiments, first interconnect 116 may be a Peripheral Component Interconnect (PCI) interconnect, or an interconnect such as a PCI Express interconnect or another I/O interconnect. In some embodiments, one of the interconnects couples to a power control unit (PCU) 117, which may include circuitry, software, and/or firmware to perform power management operations with regard to the processors 170, 180 and/or co-processor 138. PCU 117 provides control information to a voltage regulator to cause the voltage regulator to generate the appropriate regulated voltage. PCU 117 also provides control information to control the operating voltage generated. In various embodiments, PCU 117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other embodiments, power management operations to be performed by PCU 117 may be implemented externally to a processor, such as by way of a separate power management integrated circuit (PMIC) or another component external to the processor. In yet other embodiments, power management operations to be performed by PCU 117 may be implemented within BIOS or other system software.

Various I/O devices 114 may be coupled to first interconnect 116, along with an interconnect (bus) bridge 118 which couples first interconnect 116 to a second interconnect 120. In some embodiments, one or more additional processor(s) 115, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 116. In some embodiments, second interconnect 120 may be a low pin count (LPC) interconnect. Various devices may be coupled to second interconnect 120 including, for example, a keyboard and/or mouse 122, communication devices 127 and a storage unit circuitry 128. Storage unit circuitry 128 may be a disk drive or other mass storage device which may include instructions/code and data 130, in some embodiments. Further, an audio I/O 124 may be coupled to second interconnect 120. Note that other architectures than the point-to-point architecture described above are possible. For example, instead of the point-to-point architecture, a system such as multiprocessor system 100 may implement a multi-drop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

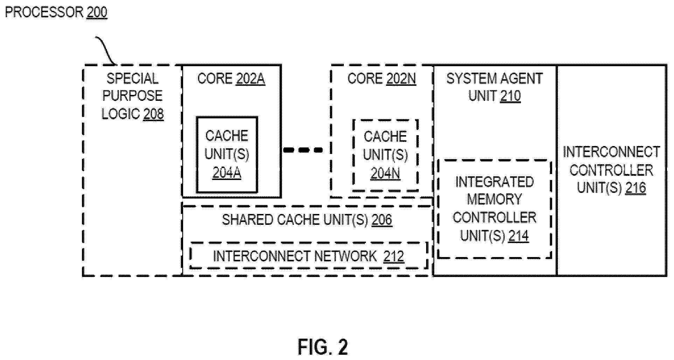

FIG. 2 illustrates a block diagram of embodiments of a processor 200 that may have more than one core, may have an integrated memory controller, and may have integrated graphics. The solid lined boxes illustrate a processor 200 with a single core 202A, a system agent 210, a set of one or more interconnect controller units circuitry 216, while the optional addition of the dashed lined boxes illustrates an alternative processor 200 with multiple cores 202(A)-(N), a set of one or more integrated memory controller unit(s) circuitry 214 in the system agent unit circuitry 210, and special purpose logic 208, as well as a set of one or more interconnect controller units circuitry 216. Note that the processor 200 may be one of the processors 170 or 180, or co-processor 138 or 115 of FIG. 1.

Thus, different implementations of the processor 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, BiCMOS, CMOS, or NMOS.

A memory hierarchy includes one or more levels of cache unit(s) circuitry 204(A)-(N) within the cores 202(A)-(N), a set of one or more shared cache units circuitry 206, and external memory (not shown) coupled to the set of integrated memory controller units circuitry 214. The set of one or more shared cache units circuitry 206 may include one or more mid-level caches, such as level 2 (L2), level 3 (L3), level 4 (L4), or other levels of cache, such as a last level cache (LLC), and/or combinations thereof. While in some embodiments ring-based interconnect network circuitry 212 interconnects the special purpose logic 208 (e.g., integrated graphics logic), the set of shared cache units circuitry 206, and the system agent unit circuitry 210, alternative embodiments use any number of well-known techniques for interconnecting such units. In some embodiments, coherency is maintained between one or more of the shared cache units circuitry 206 and cores 202(A)-(N).

In some embodiments, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous or heterogeneous in terms of architecture instruction set; that is, two or more of the cores 202(A)-(N) may be capable of executing the same instruction set, while other cores may be capable of executing only a subset of that instruction set or a different instruction set.

### Exemplary Core Architectures

### In-order and out-of-order core block diagram

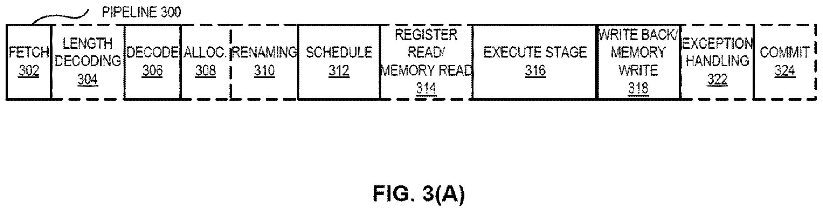

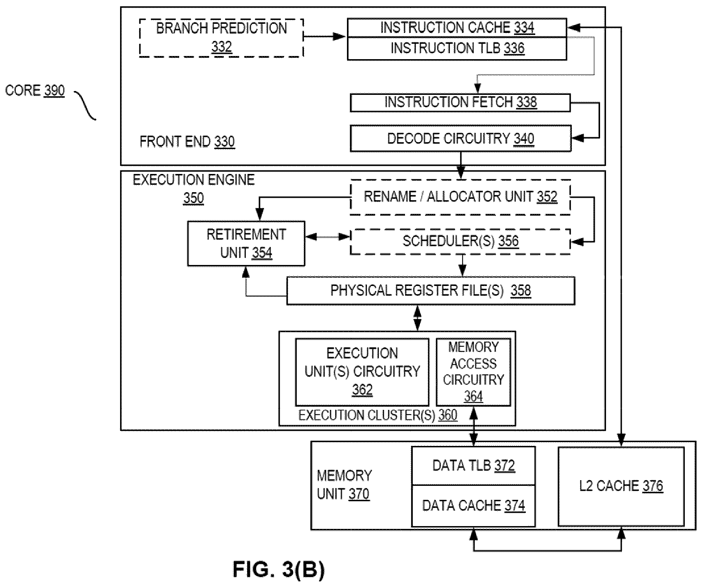

**FIG. 3(A)** is a block diagram illustrating both an exemplary in-order pipeline and an exemplary register renaming, out-of-order issue/execution pipeline according to embodiments of the invention. **FIG. 3(B)** **is** a block diagram illustrating both an exemplary embodiment of an in-order architecture core and an exemplary register renaming, out-of-order issue/execution architecture core to be included in a processor according to embodiments of the invention. The solid lined boxes in **FIGS. 3(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 3(A)****,** a processor pipeline 300 includes a fetch stage 302, an optional length decode stage 304, a decode stage 306, an optional allocation stage 308, an optional renaming stage 310, a scheduling (also known as a dispatch or issue) stage 312, an optional register read/memory read stage 314, an execute stage 316, a write back/memory write stage 318, an optional exception handling stage 322, and an optional commit stage 324. One or more operations can be performed in each of these processor pipeline stages. For example, during the fetch stage 302, one or more instructions are fetched from instruction memory, during the decode stage 306, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 306 and the register read/memory read stage 314 may be combined into one pipeline stage. In one embodiment, during the execute stage 316, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 300 as follows: 1) the instruction fetch 338 performs the fetch and length decoding stages 302 and 304; 2) the decode unit circuitry 340 performs the decode stage 306; 3) the rename/allocator unit circuitry 352 performs the allocation stage 308 and renaming stage 310; 4) the scheduler unit(s) circuitry 356 performs the schedule stage 312; 5) the physical register file(s) unit(s) circuitry 358 and the memory unit circuitry 370 perform the register read/memory read stage 314; the execution cluster 360 perform the execute stage 316; 6) the memory unit circuitry 370 and the physical register file(s) unit(s) circuitry 358 perform the write back/memory write stage 318; 7) various units (unit circuitry) may be involved in the exception handling stage 322; and 8) the retirement unit circuitry 354 and the physical register file(s) unit(s) circuitry 358 perform the commit stage 324.

**FIG. 3(B)** shows processor core 390 including front-end unit circuitry 330 coupled to an execution engine unit circuitry 350, and both are coupled to a memory unit circuitry 370. The core 390 may be a reduced instruction set computing (RISC) core, a complex instruction set computing (CISC) core, a very long instruction word (VLIW) core, or a hybrid or alternative core type. As yet another option, the core 390 may be a special-purpose core, such as, for example, a network or communication core, compression engine, coprocessor core, general purpose computing graphics processing unit (GPGPU) core, graphics core, or the like.

The front end unit circuitry 330 may include branch prediction unit circuitry 332 coupled to an instruction cache unit circuitry 334, which is coupled to an instruction translation lookaside buffer (TLB) 336, which is coupled to instruction fetch unit circuitry 338, which is coupled to decode unit circuitry 340. In one embodiment, the instruction cache unit circuitry 334 is included in the memory unit circuitry 370 rather than the front-end unit circuitry 330. The decode unit circuitry 340 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 340 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 390 includes a microcode ROM (not shown) or other medium that stores microcode for certain macroinstructions (e.g., in decode unit circuitry 340 or otherwise within the front end unit circuitry 330). In one embodiment, the decode unit circuitry 340 includes a micro-operation (micro-op) or operation cache (not shown) to hold/cache decoded operations, micro-tags, or micro-operations generated during the decode or other stages of the processor pipeline 300. The decode unit circuitry 340 may be coupled to rename/allocator unit circuitry 352 in the execution engine unit circuitry 350.

The execution engine circuitry 350 includes the rename/allocator unit circuitry 352 coupled to a retirement unit circuitry 354 and a set of one or more scheduler(s) circuitry 356. The scheduler(s) circuitry 356 represents any number of different schedulers, including reservations stations, central instruction window, etc. In some embodiments, the scheduler(s) circuitry 356 can include arithmetic logic unit (ALU) scheduler/scheduling circuitry, ALU queues, arithmetic generation unit (AGU) scheduler/scheduling circuitry, AGU queues, etc. The scheduler(s) circuitry 356 is coupled to the physical register file(s) circuitry 358. Each of the physical register file(s) circuitry 358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 358 includes vector registers unit circuitry, writemask registers unit circuitry, and scalar register unit circuitry. These register units may provide architectural vector registers, vector mask registers, general-purpose registers, etc. The physical register file(s) unit(s) circuitry 358 is overlapped by the retirement unit circuitry 354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 354 and the physical register file(s) circuitry 358 are coupled to the execution cluster(s) 360. The execution cluster(s) 360 includes a set of one or more execution units circuitry 362 and a set of one or more memory access circuitry 364. The execution units circuitry 362 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 356, physical register file(s) unit(s) circuitry 358, and execution cluster(s) 360 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 364). It should also be understood that where separate pipelines are used, one or more of these pipelines may be out-of-order issue/execution and the rest in-order.

In some embodiments, the execution engine unit circuitry 350 may perform load store unit (LSU) address/data pipelining to an Advanced Microcontroller Bus (AHB) interface (not shown), and address phase and writeback, data phase load, store, and branches.

The set of memory access circuitry 364 is coupled to the memory unit circuitry 370, which includes data TLB unit circuitry 372 coupled to a data cache circuitry 374 coupled to a level 2 (L2) cache circuitry 376. In one exemplary embodiment, the memory access units circuitry 364 may include a load unit circuitry, a store address unit circuit, and a store data unit circuitry, each of which is coupled to the data TLB circuitry 372 in the memory unit circuitry 370. The instruction cache circuitry 334 is further coupled to a level 2 (L2) cache unit circuitry 376 in the memory unit circuitry 370. In one embodiment, the instruction cache 334 and the data cache 374 are combined into a single instruction and data cache (not shown) in L2 cache unit circuitry 376, a level 3 (L3) cache unit circuitry (not shown), and/or main memory. The L2 cache unit circuitry 376 is coupled to one or more other levels of cache and eventually to a main memory.

The core 390 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 390 includes logic to support a packed data instruction set extension (e.g., AVX1, AVX2), thereby allowing the operations used by many multimedia applications to be performed using packed data.

### Exemplary Execution Unit(s) Circuitry

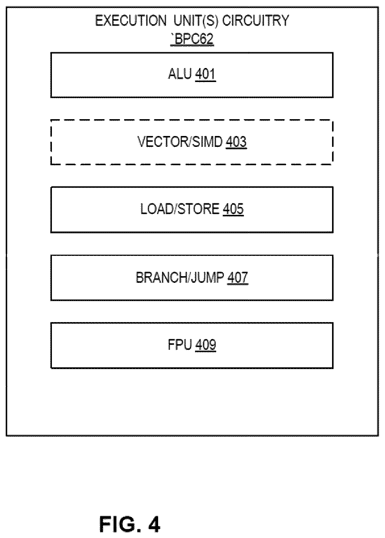

**FIG. 4** illustrates embodiments of execution unit(s) circuitry, such as execution unit(s) circuitry 362 of FIG. 3(B). As illustrated, execution unit(s) circuity 362 may include one or more ALU circuits 401, vector/SIMD unit circuits 403, load/store unit circuits 405, and/or branch/jump unit circuits 407. ALU circuits 401 perform integer arithmetic and/or Boolean operations. Vector/SIMD unit circuits 403 perform vector/SIMD operations on packed data (such as SIMD/vector registers). Load/store unit circuits 405 execute load and store instructions to load data from memory into registers or store from registers to memory. Load/store unit circuits 405 may also generate addresses. Branch/jump unit circuits 407 cause a branch or jump to a memory address depending on the instruction. Floating-point unit (FPU) circuits 409 perform floating-point arithmetic. The width of the execution unit(s) circuitry 362 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Exemplary Register Architecture

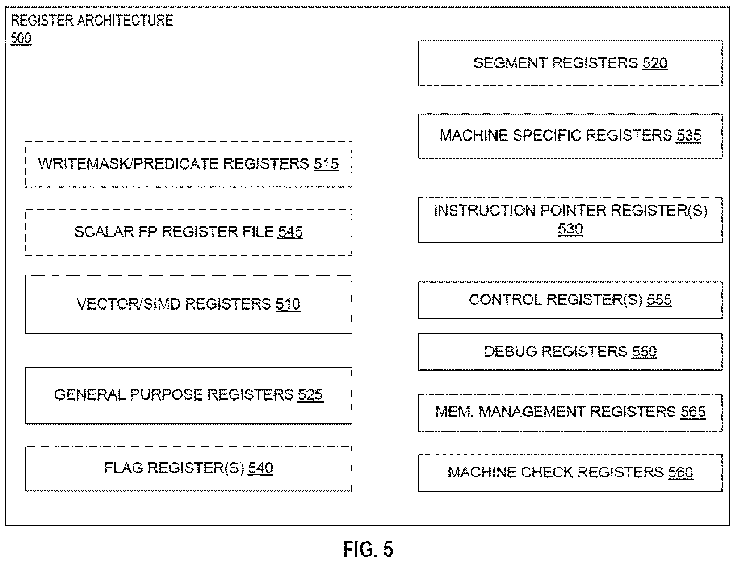

**FIG. 5** is a block diagram of a register architecture 500 according to some embodiments. As illustrated, there are vector/SIMD registers 510 that vary from 128-bit to 1,024 bits width. In some embodiments, the vector/SIMD registers 510 are physically 512-bits and, depending upon the mapping, only some of the lower bits are used. For example, in some embodiments, the vector/SIMD registers 510 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 500 includes writemask/predicate registers 515. For example, in some embodiments, there are 8 writemask/predicate registers (sometimes called k0 through k7) that are each 16-bit, 32-bit, 64-bit, or 128-bit in size. Writemask/predicate registers 515 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 515 corresponds to a data element position of the destination. In other embodiments, the writemask/predicate registers 515 are scalable and consists of a set number of enable bits for a given vector element (e.g., 8 enable bits per 64-bit vector element).

The register architecture 500 includes a plurality of general-purpose registers 525. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 500 includes scalar floating-point register 545 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 540 (e.g., EFLAGS, RFLAGS, etc.) store status and control information for arithmetic, compare, and system operations. For example, the one or more flag registers 540 may store condition code information such as carry, parity, auxiliary carry, zero, sign, and overflow. In some embodiments, the one or more flag registers 540 are called program status and control registers.

Segment registers 520 contain segment points for use in accessing memory. In some embodiments, these registers are referenced by the names CS, DS, SS, ES, FS, and GS.

Machine specific registers (MSRs) 535 control and report on processor performance. Most MSRs 535 handle system-related functions and are not accessible to an application program. Machine check registers 560 consist of control, status, and error reporting MSRs that are used to detect and report on hardware errors.

One or more instruction pointer register(s) 530 store an instruction pointer value. Control register(s) 555 (e.g., CR0-CR4) determine the operating mode of a processor (e.g., processor 170, 180, 138, 115, and/or 200) and the characteristics of a currently executing task. Debug registers 550 control and allow for the monitoring of a processor or core's debugging operations.

Memory management registers 565 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

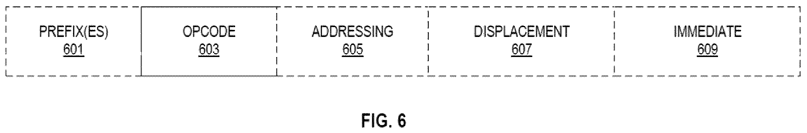

**FIG. 6** illustrates embodiments of an instruction format. As illustrated, an instruction may include multiple components including, but not limited to, one or more fields for: one or more prefixes 601, an opcode 603, addressing information 605 (e.g., register identifiers, memory addressing information, etc.), a displacement value 607, and/or an immediate 609. Note that some instructions utilize some or all of the fields of the format whereas others may only use the field for the opcode 603. In some embodiments, the order illustrated is the order in which these fields are to be encoded, however, it should be appreciated that in other embodiments these fields may be encoded in a different order, combined, etc.

The prefix(es) field(s) 601, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 603 is used to at least partially define the operation to be performed upon a decoding of the instruction. In some embodiments, a primary opcode encoded in the opcode field 603 is 1, 2, or 3 bytes in length. In other embodiments, a primary opcode can be a different length. An additional 3-bit opcode field is sometimes encoded in another field.

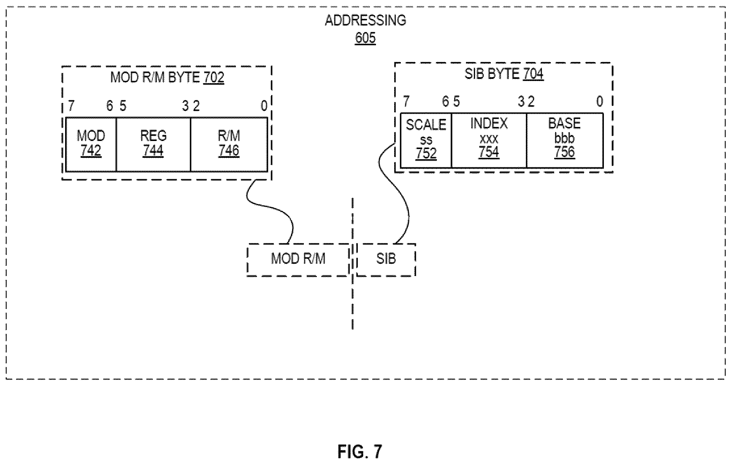

The addressing field 605 is used to address one or more operands of the instruction, such as a location in memory or one or more registers. FIG. 7 illustrates embodiments of the addressing field 605. In this illustration, an optional ModR/M byte 702 and an optional Scale, Index, Base (SIB) byte 704 are shown. The ModR/M byte 702 and the SIB byte 704 are used to encode up to two operands of an instruction, each of which is a direct register or effective memory address. Note that each of these fields are optional in that not all instructions include one or more of these fields. The MOD R/M byte 702 includes a MOD field 742, a register field 744, and R/M field 746.

The content of the MOD field 742 distinguishes between memory access and non-memory access modes. In some embodiments, when the MOD field 742 has a value of b11, a register-direct addressing mode is utilized, and otherwise register-indirect addressing is used.

The register field 744 may encode either the destination register operand or a source register operand, or may encode an opcode extension and not be used to encode any instruction operand. The content of register index field 744, directly or through address generation, specifies the locations of a source or destination operand (either in a register or in memory). In some embodiments, the register field 744 is supplemented with an additional bit from a prefix (e.g., prefix 601) to allow for greater addressing.

The R/M field 746 may be used to encode an instruction operand that references a memory address, or may be used to encode either the destination register operand or a source register operand. Note the R/M field 746 may be combined with the MOD field 742 to dictate an addressing mode in some embodiments.

The SIB byte 704 includes a scale field 752, an index field 754, and a base field 756 to be used in the generation of an address. The scale field 752 indicates scaling factor. The index field 754 specifies an index register to use. In some embodiments, the index field 754 is supplemented with an additional bit from a prefix (e.g., prefix 601) to allow for greater addressing. The base field 756 specifies a base register to use. In some embodiments, the base field 756 is supplemented with an additional bit from a prefix (e.g., prefix 601) to allow for greater addressing. In practice, the content of the scale field 752 allows for the scaling of the content of the index field 754 for memory address generation (e.g., for address generation that uses 2^{scale} * index + base).

Some addressing forms utilize a displacement value to generate a memory address. For example, a memory address may be generated according to 2^{scale} * index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 607 provides this value. Additionally, in some embodiments, a displacement factor usage is encoded in the MOD field of the addressing field 605 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 607.

In some embodiments, an immediate field 609 specifies an immediate for the instruction. An immediate may be encoded as a 1-byte value, a 2-byte value, a 4-byte value, etc.

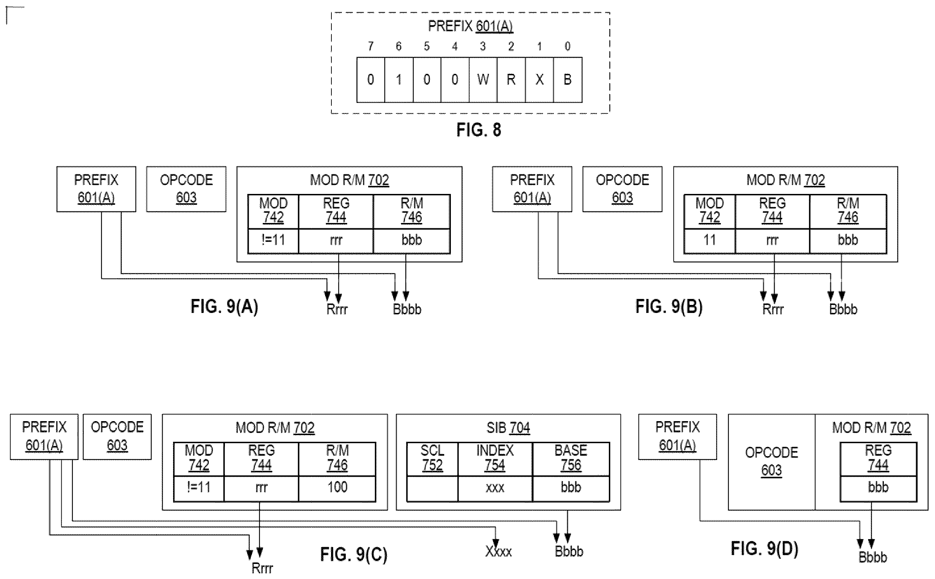

FIG. 8 illustrates embodiments of a first prefix 601(A). In some embodiments, the first prefix 601(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 601(A) may specify up to three registers using 3-bit fields depending on the format: 1) using the reg field 744 and the R/M field 746 of the Mod R/M byte 702; 2) using the Mod R/M byte 702 with the SIB byte 704 including using the reg field 744 and the base field 756 and index field 754; or 3) using the register field of an opcode.

In the first prefix 601(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 744 and MOD R/M R/M field 746 alone can each only address 8 registers.

In the first prefix 601(A), bit position 2 (R) may an extension of the MOD R/M reg field 744 and may be used to modify the ModR/M reg field 744 when that field encodes a general purpose register, a 64-bit packed data register (e.g., a SSE register), or a control or debug register. R is ignored when Mod R/M byte 702 specifies other registers or defines an extended opcode.

Bit position 1 (X) X bit may modify the SIB byte index field 754.

Bit position B (B) B may modify the base in the Mod R/M R/M field 746 or the SIB byte base field 756; or it may modify the opcode register field used for accessing general purpose registers (e.g., general purpose registers 525).

FIGS. 9(A)-(D) illustrate embodiments of how the R, X, and B fields of the first prefix 601(A) are used. FIG. 9(A) illustrates R and B from the first prefix 601(A) being used to extend the reg field 744 and R/M field 746 of the MOD R/M byte 702 when the SIB byte 7 04 is not used for memory addressing. FIG. 9(B) illustrates R and B from the first prefix 601(A) being used to extend the reg field 744 and R/M field 746 of the MOD R/M byte 702 when the SIB byte 7 04 is not used (register-register addressing). FIG. 9(C) illustrates R, X, and B from the first prefix 601(A) being used to extend the reg field 744 of the MOD R/M byte 702 and the index field 754 and base field 756 when the SIB byte 7 04 being used for memory addressing. FIG. 9(D) illustrates B from the first prefix 601(A) being used to extend the reg field 744 of the MOD R/M byte 702 when a register is encoded in the opcode 603.

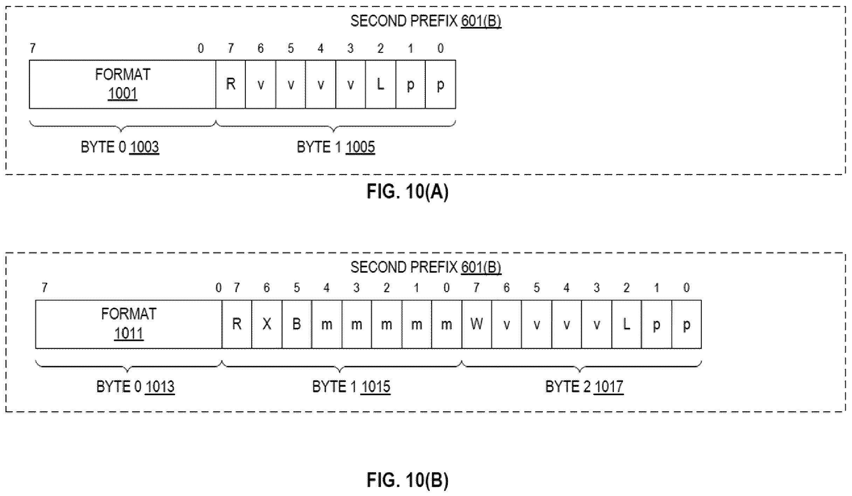

**FIGS. 10(A)****-(B)** illustrate embodiments of a second prefix 601(B). In some embodiments, the second prefix 601(B) is an embodiment of a VEX prefix. The second prefix 601(B) encoding allows instructions to have more than two operands, and allows SIMD vector registers (e.g., vector/SIMD registers 510) to be longer than 64-bits (e.g., 128-bit and 256-bit). The use of the second prefix 601(B) provides for three-operand (or more) syntax. For example, previous two-operand instructions performed operations such as A = A + B, which overwrites a source operand. The use of the second prefix 601(B) enables operands to perform nondestructive operations such as A = B + C.

In some embodiments, the second prefix 601(B) comes in two forms - a two-byte form and a three-byte form. The two-byte second prefix 601(B) is used mainly for 128-bit, scalar, and some 256-bit instructions; while the three-byte second prefix 601(B) provides a compact replacement of the first prefix 601(A) and 3-byte opcode instructions.

**FIG. 10(A)** illustrates embodiments of a two-byte form of the second prefix 601(B). In one example, a format field 1001 (byte 0 1003) contains the value C5H. In one example, byte 1 1005 includes a "R" value in bit[7]. This value is the complement of the same value of the first prefix 601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746 and the Mod R/M reg field 744 encode three of the four operands. Bits[7:4] of the immediate 609 are then used to encode the third source register operand.

**FIG. 10(B)** illustrates embodiments of a three-byte form of the second prefix 601(B). in one example, a format field 1011 (byte 0 1013) contains the value C4H. Byte 1 1015 includes in bits[7:5] "R," "X," and "B" which are the complements of the same values of the first prefix 601(A). Bits[4:0] of byte 1 1015 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1017 is used similar to W of the first prefix 601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746, and the Mod R/M reg field 744 encode three of the four operands. Bits[7:4] of the immediate 609 are then used to encode the third source register operand.

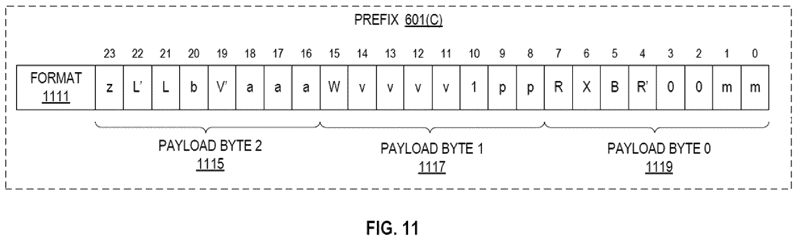

FIG. 11 illustrates embodiments of a third prefix 601(C). In some embodiments, the first prefix 601(A) is an embodiment of an EVEX prefix. The third prefix 601(C) is a four-byte prefix.

The third prefix 601(C) can encode 32 vector registers (e.g., 128-bit, 256-bit, and 512-bit registers) in 64-bit mode. In some embodiments, instructions that utilize a writemask/opmask (see discussion of registers in a previous figure, such as **FIG. 5****)** or predication utilize this prefix. Opmask register allow for conditional processing or selection control. Opmask instructions, whose source/destination operands are opmask registers and treat the content of an opmask register as a single value, are encoded using the second prefix 601(B).

The third prefix 601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 601(C) is a format field 1111 that has a value, in one example, of 62H. Subsequent bytes are referred to as payload bytes 1115-1119 and collectively form a 24-bit value of P[23:0] providing specific capability in the form of one or more fields (detailed herein).

In some embodiments, P[1:0] of payload byte 1119 are identical to the low two mmmmm bits. P[3:2] are reserved in some embodiments. Bit P[4] (R') allows access to the high 16 vector register set when combined with P[7] and the ModR/M reg field 744. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 744 and ModR/M R/M field 746. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 601(A) and second prefix 611(B) and may serve as an opcode extension bit or operand size promotion.

P[18:16] specify the index of a register in the opmask (writemask) registers (e.g., writemask/predicate registers 515). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 601(C) are detailed in the following tables.

**Table 1: 32-Register Support in 64-bit Mode**

| | **4** | **3** | **[2:0]** | **REG. TYPE** | **COMMON USAGES** |
|---|---|---|---|---|---|
| **REG** | R' | R | ModR/M reg | GPR, Vector | Destination or Source |
| **VVVV** | V' | vvvv | | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB.index | Vector | VSIB memory addressing |

**Table 2: Encoding Register Specifiers in 32-bit Mode**

| | **[2:0]** | **REG. TYPE** | **COMMON USAGES** |
|---|---|---|---|
| **REG** | ModR/M reg | GPR, Vector | Destination or Source |
| **VVVV** | vvvv | GPR, Vector | 2^{nd} Source or Destination |
| **RM** | ModR/M R/M | GPR, Vector | 1^{st} Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Table 3: Opmask Register Specifier Encoding**

| | **[2:0]** | **REG. TYPE** | **COMMON USAGES** |
|---|---|---|---|
| **REG** | ModR/M Reg | k0-k7 | Source |
| **VVVV** | vvvv | k0-k7 | 2^{nd} Source |
| **RM** | ModR/M R/M | k0-7 | 1^{st} Source |
| **{k1]** | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

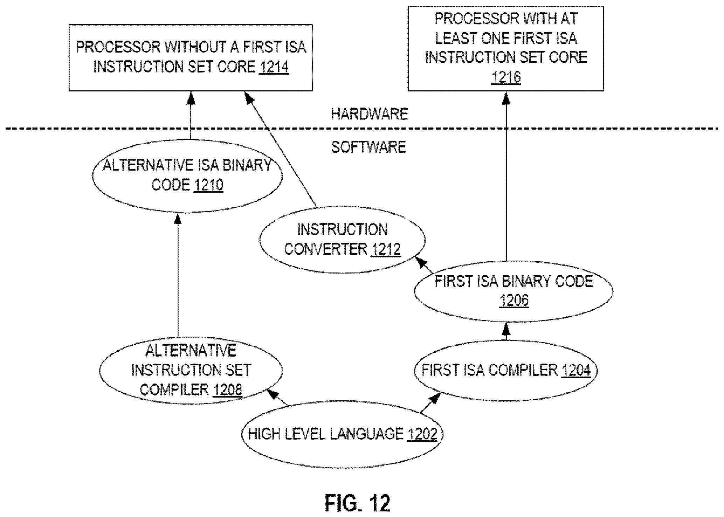

**FIG. 12** illustrates a block diagram contrasting the use of a software instruction converter to convert binary instructions in a source instruction set to binary instructions in a target instruction set according to certain implementations. In the illustrated embodiment, the instruction converter is a software instruction converter, although alternatively the instruction converter may be implemented in software, firmware, hardware, or various combinations thereof. **FIG. 12** shows a program in a high level language 1202 may be compiled using a first ISA compiler 1204 to generate first ISA binary code 1206 that may be natively executed by a processor with at least one first instruction set core 1216. The processor with at least one first ISA instruction set core 1216 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1204 represents a compiler that is operable to generate first ISA binary code 1206 (e.g., object code) that can, with or without additional linkage processing, be executed on the processor with at least one first ISA instruction set core 1216.

Similarly, **FIG. 12** shows the program in the high level language 1202 may be compiled using an alternative instruction set compiler 1208 to generate alternative instruction set binary code 1210 that may be natively executed by a processor without a first ISA instruction set core 1214. The instruction converter 1212 is used to convert the first ISA binary code 1206 into code that may be natively executed by the processor without a first ISA instruction set core 1214. This converted code is not likely to be the same as the alternative instruction set binary code 1210 because an instruction converter capable of this is difficult to make; however, the converted code will accomplish the general operation and be made up of instructions from the alternative instruction set. Thus, the instruction converter 1212 represents software, firmware, hardware, or a combination thereof that, through emulation, simulation or any other process, allows a processor or other electronic device that does not have a first ISA instruction set processor or core to execute the first ISA binary code 1206.

### APPARATUS AND METHOD FOR SECURE RESOURCE ALLOCATION

Trust Domain Extensions (TDX) is a technology that extends Virtual Machines Extensions (VMX) to help deploy hardware-isolated virtual machines (VMs) called trust domains (TDs). TDX is designed to protect the confidentiality of each TD's memory content, stored in TD private pages, and CPU state from any other software, including the hosting virtual-machine manager (VMM)/hypervisor, unless explicitly shared by the TD itself (i.e., via TD shared pages). TDX is built using a combination of Virtual Machine Extensions (VMX) and Multi-Key Total Memory Encryption (MKTME), with an attested software module, the TDX module, to implement the TDX architecture. TD and TDX module run in SEAM (Secure Arbitration Mode) non-root and root mode, respectively.

To achieve TD isolation, TDX relies on a series of memory protection mechanisms to prevent unauthorized access to a TD private page. TDX also implements various mitigations against indirect leakage of TD private data via side channel attacks. Side channel attacks enable an attacker in one trust domain to indirectly infer sensitive data processed by another isolation trust domain using byproduct information such as timing and power-related information (traditional side channel attacks), even without direct access to the data. It also enables an attacker to read arbitrary memory location of a program via new transient execution attacks. The hardening of TDX against side channel attacks include mitigations for transient execution attacks like Spectre, Meltdown and Microarchitecture Data Sampling (MDS) attacks, mitigations for branch prediction side channel attacks, and mitigations for single-step and zero-step attacks. The class of side channel attacks that TDX currently does not address is cache-based side-channel attacks.

Cache side-channel attacks are one of the most widely studied side-channel attacks which exploit the timing difference between hits and misses in the CPU cache to learn memory access patterns and further infer the secret data if the memory access patterns depend on the secret data. Fundamentally, cache attacks can be categorized as follows:

Contention-based attacks: The processor's cache is a resource shared by all the software running on the machine either in a spatial or temporal manner. When the attacker and the victim contend for the same shared resource, there will be interference that results in the attacker and victim program evicting each other's data from the cache. Prime+Probe is a well-known attack technique that exploits cache contention: by forcing the cache set into a known state ("Prime"), the attacker can later precisely monitor changes made to the cache set by the victim ("Probe").

Reuse-based attacks: If the attacker and the victim share memory, e.g., both using the same dynamically-linked library code, the attacker can monitor the victim's access pattern to the shared memory, and hence learn the victim's control flow or data flow. A Flush+Reload attack is an attack technique that exploits shared memory, where an attacker can observe the victim's access pattern to the shared memory by first flushing ("Flush") the target cache line from the cache and then measuring the reload ("Reload") time of that cache line.

Contention based attacks are more relevant to TDX since TD private pages are not shared with other TDs and the sharing of a TD shared page is explicitly controlled by the TD. Currently, TDX's guideline for cache side channel attacks is to leave the mitigation to software, i.e., software should follow constant-time coding principles to mitigate traditional side-channel attacks (including cache side channels) if side channels are a concern. Writing constant-time code is hard to get right and typically only code that deals with high-value assets like crypto code follows the constant-time coding principles. Hence, software running inside a TD is often not protected against cache side-channel attacks, and the data it processes may still be vulnerable to the untrusted host VMM and other TDs on the same platform.

Embodiments of the invention provide any software (including legacy software) running inside a TD with protection against cache side channel attacks. In particular, these embodiments extend TDX with minimum hardware/architecture support so that software can protect itself from cache side-channel attacks without the need to refactor software as constant-time code.

Some implementations of the invention include an architecture extension to harden Cache Allocation Technology (CAT) so that cache partitions can be securely reserved for exclusive use by TDX. In these implementations, cache partitioning is performed in terms of cache ways and classes-of-service (CLOSs). The reserved partitions can only be assigned to the reserved CLOSs and the reserved partitions can only be assigned by the reserved CLOSs for TD private accesses.

CAT provides software-programmable control over the amount of cache space that can be consumed by a given thread, application, VM or container, using the CLOS as a resource control tag into which a thread/app/VM/container can be grouped. With many heterogenous types of applications running on the same machine, sharing the same resource (e.g., last level cache and memory bandwidth), it is challenging to ensure consistent performance and prioritize important interactive applications. The CLOS, in turn, has associated resource capacity bitmasks (CBMs) indicating how much of the cache can be used by a given CLOS.

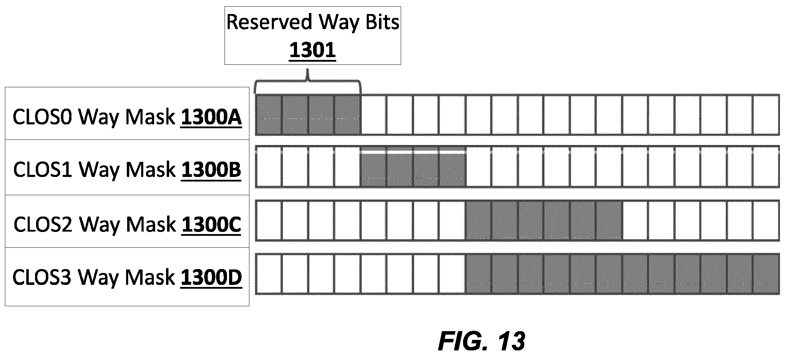

A way mask is a particular type of CBM in which each bit indicates whether a corresponding cache way is allocated. **Figure 13** illustrates an example set of way masks 1300A-D for four different classes of service (CLOS0-CLOS3). Ways are reserved for each CLOS by setting corresponding bits 1301 in the way mask (as indicated with darker shading). Each way mask 1300A-D is stored in a separate MSR associated with a CLOS (e.g., IA32_L3_MASK_n MSR where n represents CLOSn). For example, each of the four way masks 1300A-D may be stored in a separate MSR associated with a given CLOS. An MSR of each logical processor (e.g., IA32_PQR_ASSOC MSR) associates software running on that logical processor with a particular CLOS. Software can associate applications with a CLOS as needed to support a variety of usage models. For the usage model of side-channel mitigation, the CLOSs can be configured to partition the cache using non-overlapping CBMs and a portion of the cache can be reserved for one particular CLOS value (e.g., CLOSO 1300A via reserved way bits 1301).

Embodiments of the invention use CAT to achieve a coarse-grained partitioning between TDX and non-TD software. In some embodiments, TDX can then implement software-based mitigations to achieve a finer-grained partitioning among the TDs (e.g., partitioning by cache sets using page coloring) or use one partition to pin pages in the cache.

Existing CAT implementations allow any privileged software, including the untrusted host VMM, to configure the resource assignment. Consequently, there is no guarantee that the untrusted host VMM configures the CBM correctly so that TDX is assigned an exclusive cache partition.

Embodiments of the invention ensure that TDX is provided with a non-overlapping cache partition for its exclusive use. The threat model is the same as for TDX where the host VMM is not trusted. In addition, in some embodiments, the cache usage of TD-private accesses (including accesses made by the TDX module) is isolated from TD-shared accesses and accesses made by a legacy VM and the host VMM. TD-private accesses are memory accesses made to TD private page based on the value of a new SHARED bit in the Guest Physical Address (GPA). The TDX module can implement a finer-grained partitioning (e.g., page coloring) to further isolate TD-private accesses made by different TDs. The VMM is not trusted to enforce isolation.

The description below focuses on allocations in the LLC or L3 cache since the LLC is shared by all the cores in the CPU package, while core-private caches such as the L1 cache and the middle-level cache (MLC) can only be shared by the hyperthreads within a core. It should be noted, however, that the underlying principles of the invention are not limited to LLC cache reservations/allocations. Some embodiments of the invention use the same techniques for allocating/reserving other types of resources, including other cache levels. Note that the terms "LLC" and "L3" cache are used interchangeably herein.

### A. Reservation of Dedicated Resources

In one implementation, BIOS firmware or other secure program code configures reserved resources and corresponding reserved CLOS values. For example, one option to specify the cache resource is to indicate the number of reserved ways and corresponding reserved CLOS values. A consecutive portion of ways/CLOSs at the beginning/end of the total available number of ways/CLOSs may be reserved. Alternatively, or additionally, two-bit masks may be configured, one for the ways and one for the CLOS so that the cache resource can be reserved at fine granularity.

### B. Enforcement of Isolation

### a) Enforcing Association of Reserved Resources with Reserved CLOS

As mentioned with respect to Figure 13, ways and CLOSs may be reserved for TDX by setting corresponding bits 1301 within the corresponding CLOS capacity bitmasks 1300A-D (referred to as "way" masks when bits are mapped to cache ways), where each bitmask is associated with a different CLOS. The association of reserved ways is constrained such that reserved ways can only be assigned to a reserved CLOS and each reserved CLOS can only be associated with reserved ways. In some embodiments, this is enforced at the time the CLOS capacity bitmask is configured and/or at the time it is consumed.

*CBM configuration time:* Since the host VMM cannot be trusted to correctly configure the capacity bitmask for each CLOS, the host VMM is denied access to the capacity bitmask for the reserved CLOS. For example, for IA32_L3_MASK_n, if n is in the range of reserved CLOS values, writes to IA32_L3_MASK_n (e.g., via a WRMSR instruction) from untrusted entities such as the VMM (e.g., in non-secure arbitration (SEAM) mode) will generate a #GP fault. Note that this restriction is not required if the number of reserved CLOS is restricted to be 1. If only one coarse-grained partition is needed, the untrusted VMM can configure the reserved CLOS which is enforced at CBM consumption time so that the CBM for the reserved CLOS is confined to the reserved ways. Having multiple reserved CLOS enables TDX to further partition the reserved ways, which cannot only be enforced at CBM consumption time.

*CBM consumption time:* Each capacity bitmask for each CLOS (e.g., stored in IA32_L3_MASK_n for CLOSn) is consumed by the L3 cache replacement algorithm. Below, CAT_reserved_partition_MASK and CAT_non_reserved_partition_MASK represents the way bitmask for reserved ways and non-reserved ways, respectively. One embodiment of the hardware will enforce:
*Bitmask for reserved CLOSn =* IA32_L3_MASK_n & CAT_reserved_partition_MASK
*Bitmask for non-reserved CLOSn =* IA32_L3_MASK_n & CAT_non_reserved_partition_MASK

### b) Enforcing Association of Reserved CLOS to TD Private Access

To ensure that the reserved CLOS is only used for TD private accesses, the TD root (TDR) control structure is extended with a field to store the reserved CLOS for the TD. The TDR is the root control structure of a guest TD and, in one embodiment, the reserved CLOS field in the TDR control structure is set at TD creation time.

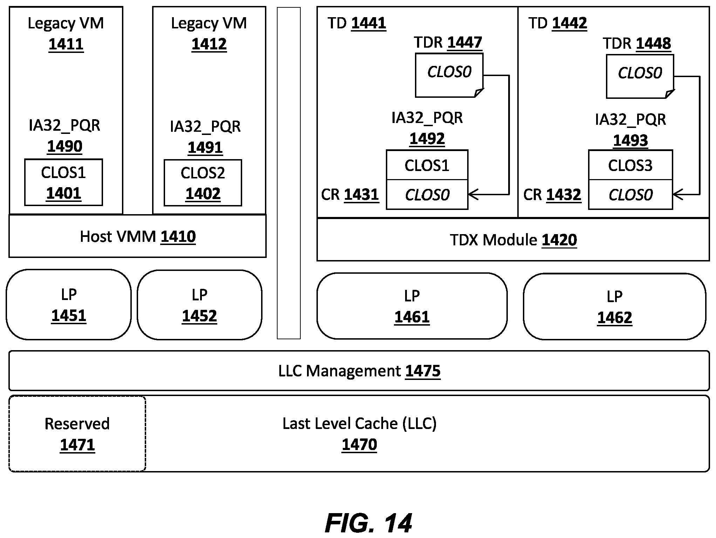

**Figure 14** illustrates an example with two TDs 1441 and 1442, each with a TDR control structure 1447 and 1448, respectively. The two TDs 1441-1442 are executed on logical processors 1461-1462 in accordance with TDX module 1420 (e.g., based on a current TDX configuration). Also illustrated are two legacy VMs 1411-1412 executed on logical processors 1451-1452 in accordance with a host VMM 1410. Threads of each legacy VM 1411-1412 are associated with corresponding CLOS values 1401-1402, respectively, stored in per-logical processor MSRs 1490-1491, respectively (e.g., IA32_PQR_ASSOC).

Upon TD entry, the reserved CLOS fields stored in the TDR control structures 1447-1448 of each TD 1441-1442, respectively (CLOS0 in the example), are loaded to internal control registers (CRs) 1431-1432, which overwrite the IA32_PQR_ASSOC MSRs 1492-1493, respectively, to provide the CLOS for access by the TDs 1441-1442 to private pages (CLOS0 in the example). At the same time, the IA32_PQR_ASSOC MSRs 1490-1493 are used to provide the CLOS values for legacy VM 1411-1412 accesses (CLOS1 and CLOS2 in the example) and TD 1441-1442 accesses to shared pages (CLOS1 and CLOS3 in the example). The reserved CLOS value (CLOS0) is associated with a capacity bitmask (e.g., a way mask) which identifies a reserved region 1471 in the LLC 1470. In Figure 13, for example, the first four bits 1301 are set for the CLOS0 way mask 1300A, thereby specifying the reserved region 1471 of the LLC 1470. As mentioned, any attempted write to one of the IA32_PQR_ASSOC MSRs 1490-1493 with a reserved CLOS value (e.g., CLOS0) will result in #GP fault.

In one embodiment, the core/logical processor 1461-1462 associates the correct CLOS value to the request. As such, the LLC cache management circuitry 1475 does not need to determine whether a request from a core is a TD-private request at cache line replacement time. In Figure 14, for example, TD-private requests are associated with CLOS0 by logical processors 1461-1462 and the cache management circuitry 1475 limits cache operations for the TD-private requests within the reserved LLC region 1471 based on the CLOS0 value. In the special case where there is a single reserved CLOS, the reserved CLOS value does not need to be stored in the TDR control structures 1447-1448 (e.g., because its value can be implied).

### c) Preventing Host Key ID (HKID) Alias

In some embodiments, TDX 1420 relies on multi-key total memory encryption (MKTME) for isolation. In particular, each TD 1441-1442 is assigned a unique Host Key ID (HKID) to encrypt TD-private pages. Since each TD-private page is not shared with any other TDs or legacy VMs 1411-1412, and the memory management unit (MMU) can prevent the legacy VM/VMM from mapping to a TD-private page using the TD-private HKID, a TD is generally not subject to reuse-based attacks such as Flush-Reload attacks. The only exception can occur when the attacker maps the TD private page using a shared HKID, which is known as the keyID alias problem. In certain configurations and circumstances force evictions of older aliased data toprevent the keyID alias problem, there may exist a new side channel similar to Flush-Reload attacks.

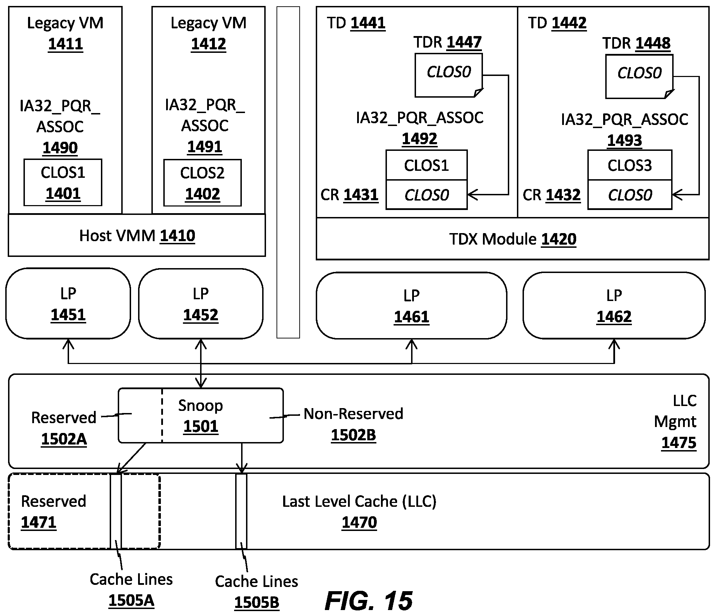

Referring to Figure 15, snoop logic 1501 of one embodiment of the LLC management circuitry 1475 allows duplicate copies of cache lines 1505A-B to exist in both the reserved region 1471 (e.g., stored in the reserved ways) and the non-reserved region of the LLC 1470. In one embodiment, the snoop logic 1501 ignores cache lines 1505A in the reserved region 1471 in response to snoop requests from LPs 1451-1452, 1461-1462 associated with non-reserved CLOS values (i.e., snooping only in the non-reserved region of the LLC 1470). Conversely, the snoop logic 1501 ignores cache lines 1505B in the non-reserved region of the LLC 1470 in response to snoop requests associated with reserved CLOS values (e.g., CLOS0) (i.e., snooping only in the reserved region 1471). Since TD-private pages are not shared with the host VMM or legacy VMs, having duplicates of cache lines 1505A-B from TD-private pages in both reserved and non-reserved ways does not result in coherence problems.

### C. Hardening of Other Resources

In some embodiments of the invention, other types of shared resources are reserved for exclusive usage by certain software components (e.g., such as TDs 1441-1442), including other cache levels (e.g., such as the mid-level cache (MLC)), and the snoop filter 1501. For example, as indicated in **Figure 15****,** a reserved region 1502A and a non-reserved region 1502B of the snoop filter 1501 may be indicated via mask values (or other types of values) stored in one or more control registers (e.g., such as the CLOS MSRs described above). In this implementation, snoop requests generated from reserved CLOS values will be handled exclusively from the reserved region 1502A and snoop requests from non-reserved CLOS values will be handled by the non-reserved region 1502B.

In one embodiment, the architecture for reserving CLOS values operates as previously described, i.e., the reserved portions of the resources share the same reserved CLOS values, regardless of what additional resource types are partitioned into reserved and non-reserved regions. In some embodiments, each resource type reserves a portion of its resources individually. At least one CLOS value needs to be reserved to reserve any of these resource types.

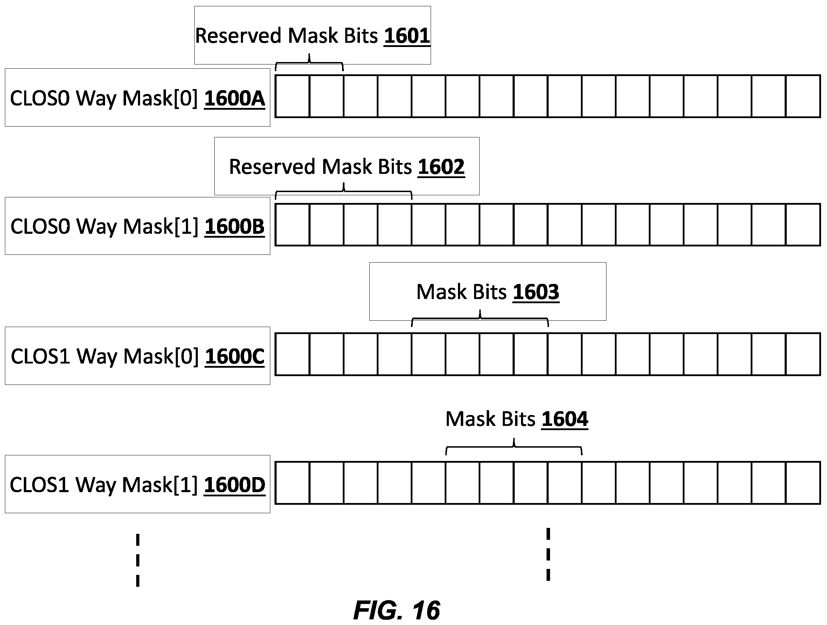

In some embodiments, each CLOS is associated with multiple mask values to configure resource allocations for different categories of information. **Figure 16** illustrates an example in which two way mask registers are configured for each CLOS. For example, way mask registers 1600A-B are associated with CLOS0 and way mask registers 1600C-D are associated with CLOS1. A different set of reserved mask bits 1601-1602 are set in each register 1600A-B, respectively, to indicate the portions of the resource which are reserved for each of two different types of information. Similarly, different sets of mask bits 1603-1604 are set in CLOS1 way mask registers 1600C-D, respectively, to indicate the non-reserved portion of the resource to be allocated for the two different types of information. By way of example, and not limitation, a code-data prioritization (CDP) scheme may be implemented using separate resource allocations for code and data. Reservation of a CDP CLOS corresponds to the configuration of reserved mask bits 1601 in CLOS0 way mask register 1600A for code and the configuration of reserved mask bits 1602 in CLOS0 way mask register 1600B for data. More formally, once CLOSn is reserved for TDX, CLOSn.Data (MASK_2n) and CLOSn.Code (MASK_2n+1) are reserved for controlling the resource usage of data and code, respectively.

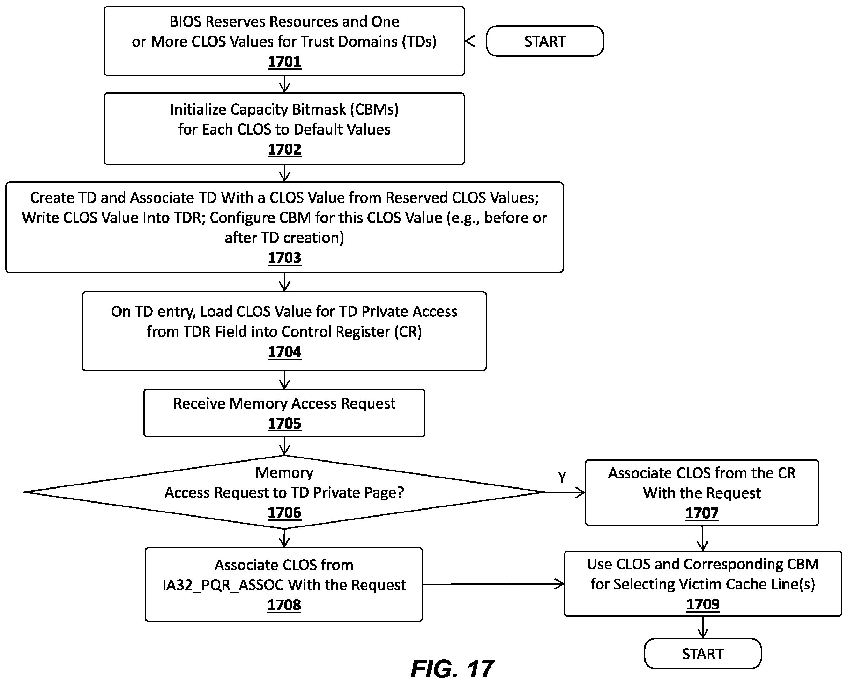

A method in accordance with one embodiment is illustrated in **Figure 17****.** The method may be implemented on the various architectures described herein, but is not limited to any particular processor or system architecture.

At 1701, BIOS (e.g., secure BIOS/firmware) reserves resources and one or more CLOS values for trust domains and, at 1702, capacity bitmasks (CBMs) for each CLOS are initialized to default values. For example, the CBM for the reserved CLOS may include a bit mask of all zeroes for non-reserved resources and bitsfor reserved resources to be all ones (and vice-versa for non-reserved CLOS values).

At 1703, at TD creation time (e.g., when creating a TD VM), the TD is associated with a CLOS value from the reserved CLOS values and the CLOS value is written into the TD root (TDR) field. The TDX module may additionally configure the CBM for this CLOS. Note, however, that the TDX module does not necessarily configure the CBM at TD creation time; rather, in some implementations, the CBM is configured before any TD is created.

At 1704, on TD entry, the CLOS value for TD private access is loaded from the TDR field into a control register (CR) (e.g., CR 1431 described above). At 1705, a memory access request is received. If the memory access request is made to TD private page, the CLOS value from the CR is associated with the request at 1707; otherwise the CLOS value from IA32_PQR_ASSOC (e.g., IA32_PQR_ASSOC 1592 described above) is associated with the request at 1708.

Assuming that the memory access request is permitted based on the source of the request, the CLOS value and its corresponding CBM are consumed at cache replacement time and used, for example, to select victim cache lines for replacement. Thus, at 1709, the CLOS and corresponding CBM are used for selecting one or more victim cache lines (e.g., from a reserved region. In these embodiments, the allowed resource is determined by the IA32_L3_MASK_n (i.e., CBM) and the way bitmask for reserved ways and non-reserved ways.

In some implementations, a write MSR (WRMSR) is performed to the MSR containing the capacity bitmask value (e.g., IA32_L3_MASK_n at CBM configuration time). In a secure implementation, if the WRMSR is executed from non-SEAM mode and the MSR is associated with a reserved CLOS value and there is more than one reserved CLOS value, then the write request is denied and a fault is generated. In addition, TD entry, a WRMSR operation to IA32_PQR_ASSOC MSR is attempted. If the CLOS value to be written is a reserved CLOS value, then TD entry fails and a fault is generated.

The embodiments of the invention described above provide numerous advantages over existing mitigation techniques such as randomization-based mitigations which require non-trivial changes to the cache architecture and provide only probabilistic security guarantees. Moreover, in contrast to the embodiments of the invention, existing partitioning-based mitigations are incompatible with the TDX threat model since partitioning needs to be configured and managed by system software and therefore cannot provide any guarantee with respect to the partitioning property for TDs (i.e., exclusive ownership of the cache partition). Additionally, mitigations that minimize inclusion victims cannot fully prevent cache side channel attacks. All of these issues are resolved by the embodiments of the invention described above.

### EXAMPLES

The following are example implementations of different embodiments of the invention.

Example 1. A processor, comprising: a plurality of cores, each core of the plurality of cores to provide at least one logical processor of a plurality of logical processors; a first plurality of registers, each register of the first plurality of registers to associate a class of service (CLOS) value with a corresponding logical processor of the plurality of logical processors; a second plurality of registers, each register of the second plurality of registers to indicate a portion of a shared resource to be allocated to a corresponding CLOS value; a first control register of a first logical processor of the plurality of logical processors to be configured with a reserved CLOS value associated with a trusted control structure; resource reservation circuitry configurable by secure firmware or software to indicate a reserved portion of the shared resource associated with the reserved CLOS value; and enforcement circuitry to limit access to the reserved portion of the shared resource to threads or logical processors associated with the reserved CLOS value.

Example 2. The processor of claim 1 wherein the second plurality of registers comprise a plurality of mask registers, each mask register of the plurality of mask registers to store a mask value indicating a corresponding portion of the shared resource to be allocated to the corresponding CLOS value.

Example 3. The processor of examples of claim 1 or 2 wherein a first register of the second plurality of registers associated with the reserved CLOS value is to store a first mask value to indicate a portion of the reserved portion of the shared resource allocated to the reserved CLOS value.

Example 4. The processor of any of examples 1-3 wherein the portion of the reserved portion of the shared resource is to be used to store data shared within a trust domain associated with the reserved CLOS value.

Example 5. The processor of any of examples 1-4 wherein the shared resource comprises a cache and wherein each mask value comprises a plurality of bits corresponding to a plurality of cache ways, wherein a bit of the plurality of bits is to be set to a first value to indicate that a corresponding cache way is allocated to the corresponding CLOS value.

Example 6. The processor of any of examples 1-5 further comprising: cache management circuitry to manage allocations and evictions of cache lines within the cache, wherein the cache management circuitry is to allocate multiple copies of some cache lines, including first copies of the cache lines in a reserved region of the cache associated with the reserved CLOS value and second copies of the cache lines in one or more non-reserved regions of the cache associated with non-reserved CLOS values.

Example 7. The processor of any of examples 1-6, wherein in response to snoop requests from logical processors associated with a non-reserved CLOS value, the cache management circuitry is to ignore the first copies of the cache lines in the reserved region.

Example 8. The processor of any of examples 1-7 wherein in response to snoop requests from logical processors associated with the reserved CLOS value, the cache management circuitry is to ignore the second copies of cache lines in the one or more non-reserved regions of the cache.

Example 9. A method comprising: storing in each register of a first plurality of registers, a class of service (CLOS) value associated with a corresponding logical processor of a plurality of logical processors; storing in each register of a second plurality of registers an indication of a portion of a shared resource to be allocated to a corresponding CLOS value; storing in a first control register of a first logical processor of the one or more logical processors a reserved CLOS value associated with a trusted control structure; indicating by secure firmware or software a reserved portion of the shared resource associated with the reserved CLOS value; and limiting access to the reserved portion of the shared resource to threads or logical processors associated with the reserved CLOS value.

Example 10. The method of example 9 wherein the second plurality of registers comprise a plurality of mask registers, each mask register of the plurality of mask registers to store a mask value indicating a corresponding portion of the shared resource to be allocated to the corresponding CLOS value.

Example 11. The method of examples 9 or 10 wherein a first register of the second plurality of registers associated with the reserved CLOS value is to store a first mask value to indicate a portion of the reserved portion of the shared resource allocated to the reserved CLOS value.

Example 12. The method of any of examples 9-11 wherein the portion of the reserved portion of the shared resource is to be used to store data shared within a trust domain associated with the reserved CLOS value.

Example 13. The method of any of examples 9-11 wherein the shared resource comprises a cache and wherein each mask value comprises a plurality of bits corresponding to a plurality of cache ways, wherein a bit of the plurality of bits is to be set to a first value to indicate that a corresponding cache way is allocated to the corresponding CLOS value.

Example 14. The method of any of examples 9-13 further comprising: managing allocations and evictions of cache lines within the cache, wherein managing comprises allocating multiple copies of some cache lines, including first copies of the cache lines in a reserved region of the cache associated with the reserved CLOS value and second copies of the cache lines in one or more non-reserved regions of the cache associated with non-reserved CLOS values.

Example 15. A machine-readable medium having program code stored thereon which, when executed by a machine, causes the machine to perform operations comprising: storing in each register of a first plurality of registers, a class of service (CLOS) value associated with a corresponding logical processor of a plurality of logical processors; storing in each register of a second plurality of registers an indication of a portion of a shared resource to be allocated to a corresponding CLOS value; storing in a first control register of a first logical processor of the one or more logical processors a reserved CLOS value associated with a trusted control structure; indicating by secure firmware or software a reserved portion of the shared resource associated with the reserved CLOS value; and limiting access to the reserved portion of the shared resource to threads or logical processors associated with the reserved CLOS value.

Example 16. The machine-readable medium of example 15 wherein the second plurality of registers comprise a plurality of mask registers, each mask register of the plurality of mask registers to store a mask value indicating a corresponding portion of the shared resource to be allocated to the corresponding CLOS value.

Example 17. The machine-readable medium of examples 15 or 16 wherein a first register of the second plurality of registers associated with the reserved CLOS value is to store a first mask value to indicate a portion of the reserved portion of the shared resource allocated to the reserved CLOS value.

Example 18. The machine-readable medium of any of examples 15-17 wherein the portion of the reserved portion of the shared resource is to be used to store data shared within a trust domain associated with the reserved CLOS value.

Example 19. The machine-readable medium of any of examples 15-18 wherein the shared resource comprises a cache and wherein each mask value comprises a plurality of bits corresponding to a plurality of cache ways, wherein a bit of the plurality of bits is to be set to a first value to indicate that a corresponding cache way is allocated to the corresponding CLOS value.

Example 20. The machine-readable medium of any of examples 15-19 further comprising: managing allocations and evictions of cache lines within the cache, wherein managing comprises allocating multiple copies of some cache lines, including first copies of the cache lines in a reserved region of the cache associated with the reserved CLOS value and second copies of the cache lines in one or more non-reserved regions of the cache associated with non-reserved CLOS values.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware.

## Claims

1. A processor (200), comprising:
a plurality of cores (202), each core of the plurality of cores (202) to provide at least one logical processor of a plurality of logical processors (1451, 1452, 1461, 1462);
a first plurality of registers (1490-1493), each register of the first plurality of registers (1490-1493) to associate a class of service, CLOS, value (1401, 1402) with a corresponding logical processor of the plurality of logical processors (1451, 1452, 1461, 1462);
a second plurality of registers, each register of the second plurality of registers (1431, 1432) to indicate a portion of a shared resource to be allocated to a corresponding CLOS value (1401, 1402);
a first control register (1431, 1432) of a first logical processor of the plurality of logical processors (1451, 1452, 1461, 1462) to be configured with a reserved CLOS value (1502A) associated with a trusted control structure (1447, 1448);
resource reservation circuitry configurable by secure firmware or software to indicate a reserved portion of the shared resource associated with the reserved CLOS value (1502A); and
enforcement circuitry to limit access to the reserved portion of the shared resource to threads or logical processors (1451, 1452, 1461, 1462) associated with the reserved CLOS value (1502A),
wherein the shared resource comprises a cache (1470) and wherein each mask value comprises a plurality of bits (1300A-D) corresponding to a plurality of cache ways, wherein a bit of the plurality of bits (1300A-D) is to be set to a first value to indicate that a corresponding cache way is allocated to the corresponding CLOS value (1401, 1402), and
wherein the processor (200) further comprises:
cache management circuitry (1475) to manage allocations and evictions of cache lines within the cache (1470), wherein the cache management circuitry (1475) is to allocate multiple copies of some cache lines, including first copies of the cache lines (1505A) in a reserved region (1471) of the cache (1470) associated with the reserved CLOS value (1502A) and second copies of the cache lines (1505B) in one or more non-reserved regions of the cache (1470) associated with non-reserved CLOS values (1502B).

2. The processor (200) of claim 1 wherein the second plurality of registers comprise a plurality of mask registers (1600A-D), each mask register of the plurality of mask registers (1600A-D) to store a mask value (1601-1604) indicating a corresponding portion of the shared resource to be allocated to the corresponding CLOS value (1401, 1402).

3. The processor (200) of claim 2 wherein a first register of the second plurality of registers associated with the reserved CLOS value (1502A) is to store a first mask value (1601, 1602) to indicate a portion of the reserved portion of the shared resource allocated to the reserved CLOS value (1502A).

4. The processor (200) of claim 3 wherein the portion of the reserved portion of the shared resource is to be used to store data shared within a trust domain (1441, 1442) associated with the reserved CLOS value (1502A).

5. The processor (200) of any of claims 1 to 4, wherein in response to snoop requests (1501) from logical processors (1451, 1452, 1461, 1462) associated with a non-reserved CLOS value (1502B), the cache management circuitry (1475) is to ignore the first copies of the cache lines (1505A) in the reserved region (1471).

6. The processor (200) of claim 5 wherein in response to snoop requests (1501) from logical processors (1451, 1452, 1461, 1462) associated with the reserved CLOS value (1520A), the cache management circuitry (1475) is to ignore the second copies of cache lines (1505B) in the one or more non-reserved regions of the cache (1470).

7. A method comprising:
storing in each register of a first plurality of registers, a class of service, CLOS, value associated with a corresponding logical processor of a plurality of logical processors;
storing in each register of a second plurality of registers an indication of a portion of a shared resource to be allocated to a corresponding CLOS value;
storing in a first control register of a first logical processor of the one or more logical processors a reserved CLOS value associated with a trusted control structure;
indicating by secure firmware or software a reserved portion of the shared resource associated with the reserved CLOS value; and
limiting access to the reserved portion of the shared resource to threads or logical processors associated with the reserved CLOS value,
wherein the shared resource comprises a cache and wherein each mask value comprises a plurality of bits corresponding to a plurality of cache ways, wherein a bit of the plurality of bits is to be set to a first value to indicate that a corresponding cache way is allocated to the corresponding CLOS value, and
wherein the method further comprises:
managing allocations and evictions of cache lines within the cache, wherein managing comprises allocating multiple copies of some cache lines, including first copies of the cache lines in a reserved region of the cache associated with the reserved CLOS value and second copies of the cache lines in one or more non-reserved regions of the cache associated with non-reserved CLOS values.

8. The method of claim 7 wherein the second plurality of registers comprise a plurality of mask registers, each mask register of the plurality of mask registers to store a mask value indicating a corresponding portion of the shared resource to be allocated to the corresponding CLOS value.

9. The method of claim 8 wherein a first register of the second plurality of registers associated with the reserved CLOS value is to store a first mask value to indicate a portion of the reserved portion of the shared resource allocated to the reserved CLOS value.

10. The method of claim 9 wherein the portion of the reserved portion of the shared resource is to be used to store data shared within a trust domain associated with the reserved CLOS value.

11. A machine-readable medium having program code stored thereon which, when executed by a machine, causes the machine to perform the method of any of claims 7 to 10.

## Patentansprüche

1. Prozessor (200), der umfasst:
eine Vielzahl von Kernen (202), wobei jeder Kern der Vielzahl von Kernen (202) mindestens einen logischen Prozessor einer Vielzahl von logischen Prozessoren (1451, 1452, 1461, 1462) bereitstellen soll;
eine erste Vielzahl von Registern (1490-1493), wobei jedes Register der ersten Vielzahl von Registern (1490-1493) einen Dienstklasse- bzw. CLOS-Wert (1401, 1402) mit einem entsprechenden logischen Prozessor der Vielzahl von logischen Prozessoren (1451, 1452, 1461, 1462) assoziieren soll;
eine zweite Vielzahl von Registern, wobei jedes Register der zweiten Vielzahl von Registern (1431, 1432) einen Teil einer gemeinsam genutzten Ressource angeben soll, der einem entsprechenden CLOS-Wert (1401, 1402) zugewiesen werden soll;
ein erstes Steuerregister (1431, 1432) eines ersten logischen Prozessors der mehreren logischen Prozessoren (1451, 1452, 1461, 1462), das mit einem reservierten CLOS-Wert (1502A) konfiguriert werden soll, der mit einer vertrauenswürdigen Steuerstruktur (1447, 1448) assoziiert ist;
eine Ressourcenreservierungsschaltungsanordnung, die durch sichere Firmware oder Software dazu konfigurierbar ist, einen mit dem reservierten CLOS-Wert (1502A) assoziierten reservierten Teil der gemeinsam genutzten Ressource anzugeben; und
eine Durchsetzungsschaltungsanordnung zum Begrenzen des Zugriffs auf den reservierten Teil der gemeinsam genutzten Ressource auf Threads oder logische Prozessoren (1451, 1452, 1461, 1462), die mit dem reservierten CLOS-Wert (1502A) assoziiert sind,
wobei die gemeinsam genutzte Ressource einen Cache (1470) umfasst und wobei jeder Maskenwert eine Vielzahl von Bits (1300A-D) umfasst, die einer Vielzahl von Cache-Wegen entsprechen, wobei ein Bit der Vielzahl von Bits (1300A-D) auf einen ersten Wert gesetzt werden soll, um anzugeben, dass ein entsprechender Cache-Weg dem entsprechenden CLOS-Wert (1401, 1402) zugewiesen wird, und
wobei der Prozessor (200) ferner Folgendes umfasst:
eine Cache-Verwaltungsschaltungsanordnung (1475) zum Verwalten von Zuweisungen und Räumungen von Cache-Zeilen innerhalb des Caches (1470), wobei die Cache-Verwaltungsschaltungsanordnung (1475) mehrere Kopien einiger Cache-Zeilen zuweisen soll, einschließlich erster Kopien der Cache-Zeilen (1505A) in einem reservierten Bereich (1471) des Caches (1470), der mit dem reservierten CLOS-Wert (1502A) assoziiert ist, und zweiter Kopien der Cache-Zeilen (1505B) in einem oder mehreren nicht reservierten Bereichen des Caches (1470), die mit dem nicht reservierten CLOS-Wert (1502B) assoziiert sind.

2. Prozessor (200) nach Anspruch 1, wobei die zweite Vielzahl von Registern eine Vielzahl von Maskenregistern (1600A-D) umfasst, wobei jedes Maskenregister der Vielzahl von Maskenregistern (1600A-D) einen Maskenwert (1601-1604) speichern soll, der einen entsprechenden Teil der gemeinsam genutzten Ressource angibt, der dem entsprechenden CLOS-Wert (1401, 1402) zugewiesen werden soll.

3. Prozessor (200) nach Anspruch 2, wobei ein erstes Register der zweiten Vielzahl von Registern, die mit dem reservierten CLOS-Wert (1502A) assoziiert sind, einen ersten Maskenwert (1601, 1602) speichern soll, um einen Teil des reservierten Teils der gemeinsam genutzten Ressource anzugeben, der dem reservierten CLOS-Wert (1502A) zugewiesen ist.

4. Prozessor (200) nach Anspruch 3, wobei der Teil des reservierten Teils der gemeinsam genutzten Ressource verwendet werden soll, um Daten zu speichern, die innerhalb einer mit dem reservierten CLOS-Wert (1502A) assoziierten Vertrauensdomäne (1441, 1442) gemeinsam genutzt werden.

5. Prozessor (200) nach einem der Ansprüche 1 bis 4, wobei als Reaktion auf Snoop-Anforderungen (1501) von logischen Prozessoren (1451, 1452, 1461, 1462), die mit einem nicht reservierten CLOS-Wert (1502B) assoziiert sind, die Cache-Verwaltungsschaltungsanordnung (1475) die ersten Kopien der Cache-Zeilen (1505A) in dem reservierten Bereich (1471) ignorieren soll.

6. Prozessor (200) nach Anspruch 5, wobei als Reaktion auf Snoop-Anforderungen (1501) von logischen Prozessoren (1451, 1452, 1461, 1462), die mit dem reservierten CLOS-Wert (1520A) assoziiert sind, die Cache-Verwaltungsschaltungsanordnung (1475) die zweiten Kopien von Cache-Zeilen (1505B) in dem einen oder den mehreren nicht reservierten Bereichen des Cache (1470) ignorieren soll.

7. Verfahren, das Folgendes umfasst:
Speichern eines Dienstklasse- bzw. CLOS-Werts, der mit einem entsprechenden logischen Prozessor einer Vielzahl von logischen Prozessoren assoziiert ist, in jedem Register einer ersten Vielzahl von Registern;
Speichern einer Angabe eines Teils einer gemeinsam genutzten Ressource, der einem entsprechenden CLOS-Wert zugewiesen werden soll, in jedem Register einer zweiten Vielzahl von Registern;
Speichern eines reservierten CLOS-Werts, der mit einer vertrauenswürdigen Steuerstruktur assoziiert ist, in einem ersten Steuerregister eines ersten logischen Prozessors des einen oder der mehreren logischen Prozessoren;
Angeben eines reservierten Teils der gemeinsam genutzten Ressource, der mit dem reservierten CLOS-Wert assoziiert ist, durch sichere Firmware oder Software; und
Begrenzen des Zugriffs auf den reservierten Teil der gemeinsam genutzten Ressource auf Threads oder logische Prozessoren, die mit dem reservierten CLOS-Wert assoziiert sind,
wobei die gemeinsam genutzte Ressource einen Cache umfasst und wobei jeder Maskenwert eine Vielzahl von Bits umfasst, die einer Vielzahl von Cache-Wegen entsprechen, wobei ein Bit der Vielzahl von Bits auf einen ersten Wert gesetzt werden soll, um anzugeben, dass ein entsprechender Cache-Weg dem entsprechenden CLOS-Wert zugewiesen wird, und
wobei das Verfahren ferner Folgendes umfasst:
Verwalten von Zuweisungen und Räumungen von Cache-Zeilen innerhalb des Caches, wobei das Verwalten Zuweisen mehrerer Kopien einiger Cache-Zeilen umfasst, einschließlich erster Kopien der Cache-Zeilen in einem reservierten Bereich des Caches, der mit dem reservierten CLOS-Wert assoziiert ist, und zweiter Kopien der Cache-Zeilen in einem oder mehreren nicht reservierten Bereichen des Caches, die mit dem nicht reservierten CLOS-Wert assoziiert sind.

8. Verfahren nach Anspruch 7, wobei die zweite Vielzahl von Registern eine Vielzahl von Maskenregistern umfasst, wobei jedes Maskenregister der Vielzahl von Maskenregistern einen Maskenwert speichern soll, der einen entsprechenden Teil der gemeinsam genutzten Ressource angibt, der dem entsprechenden CLOS-Wert zugewiesen werden soll.

9. Verfahren nach Anspruch 8, wobei ein erstes Register der zweiten Vielzahl von Registern, die mit dem reservierten CLOS-Wert assoziiert sind, einen ersten Maskenwert speichern soll, um einen Teil des reservierten Teils der gemeinsam genutzten Ressource anzugeben, der dem reservierten CLOS-Wert zugewiesen ist.

10. Verfahren nach Anspruch 9, wobei der Teil des reservierten Teils der gemeinsam genutzten Ressource verwendet werden soll, um Daten zu speichern, die innerhalb einer mit dem reservierten CLOS-Wert assoziierten Vertrauensdomäne gemeinsam genutzt werden.

11. Maschinenlesbares Medium, auf dem ein Programmcode gespeichert ist, der bei Ausführung durch eine Maschine bewirkt, dass die Maschine das Verfahren nach einem der Ansprüche 7 bis 10 durchführt.

## Revendications

1. Processeur (200) comprenant :
une pluralité de cœurs (202), chaque cœur de la pluralité de cœurs (202) étant destiné à fournir au moins un processeur logique d'une pluralité de processeurs logiques (1451, 1452, 1461, 1462),
une première pluralité de registres (1490-1493), chaque registre de la première pluralité de registres (1490-1493) associant une valeur de classe de service, CLOS (1401, 1402) à un processeur logique correspondant de la pluralité de processeurs logiques (1451, 1452, 1461, 1462) ;
une seconde pluralité de registres, chaque registre de la seconde pluralité de registres (1431, 1432) indiquant une partie d'une ressource partagée à attribuer à une valeur CLOS (1401, 1402) correspondante ;
un premier registre de contrôle (1431, 1432) d'un premier processeur logique de la pluralité de processeurs logiques (1451, 1452, 1461, 1462) à configurer avec une valeur CLOS réservé (1502A) associé à une structure de contrôle de confiance (1447, 1448) ;
des circuits de réservation de ressources configurables par micrologiciel ou logiciel sécurisé pour indiquer une partie réservée de la ressource partagée associée à la valeur CLOS réservée (1502A) ; et
des circuits d'application pour limiter l'accès à la partie réservée de la ressource partagée aux unités d'exécution ou aux processeurs logiques (1451, 1452, 1461, 1462) associés à la valeur CLOS réservée (1502A), la ressource partagée comprenant une antémémoire (1470) et chaque valeur de masque comprenant une pluralité de bits (1300A-d) correspondant à une pluralité de voies d'antémémoire, un bit de la pluralité de bits (1300A-d) devant être réglé à une première valeur pour indiquer qu'une voie d'antémémoire correspondante est attribuée à la valeur CLOS correspondante (1401, 1402), et
le processeur (200) comprenant en outre :
des circuits de gestion d'antémémoire (1475) pour gérer des attributions et des évictions de lignes d'antémémoire dans l'antémémoire (1470), les circuits de gestion d'antémémoire (1475) permettant d'attribuer des copies multiples de certaines lignes d'antémémoire, comprenant des premières copies des lignes d'antémémoire (1505A) dans une région réservée (1471) de l'antémémoire (1470) associée à la valeur CLOS réservée (1502A) et des secondes copies des lignes d'antémémoire (1505B) dans une ou plusieurs régions non réservées de l'antémémoire (1470) associées à des valeurs CLOS non réservées (1502B).

2. Processeur (200) selon la revendication 1, la seconde pluralité de registres comprenant une pluralité de registres de masque (1600A-d), chaque registre de masque de la pluralité de registres de masque (1600A-d) étant destiné à stocker une valeur de masque (1601-1604) indiquant une partie correspondante de la ressource partagée à attribuer à la valeur CLOS correspondante (1401, 1402).

3. Processeur (200) selon la revendication 2, un premier registre de la seconde pluralité de registres associé à la valeur CLOS réservée (1502A) devant stocker une première valeur de masque (1601, 1602) pour indiquer une partie de la partie réservée de la ressource partagée attribuée à la valeur CLOS réservée (1502A).

4. Processeur (200) selon la revendication 3, la partie de la partie réservée de la ressource partagée devant être utilisée pour stocker des données partagées dans un domaine de confiance (1441, 1442) associé à la valeur CLOS réservée (1502A).

5. Processeur (200) selon l'une quelconque des revendications 1 à 4, en réponse à des demandes de surveillance (1501) provenant de processeurs logiques (1451, 1452, 1461, 1462) associés à une valeur CLOS non réservée (1502B), le circuit de gestion d'antémémoire (1475) devant ignorer les premières copies des lignes d'antémémoire (1505A) dans la région réservée (1471).

6. Processeur (200) selon la revendication 5, en réponse à des demandes de surveillance (1501) provenant de processeurs logiques (1451, 1452, 1461, 1462) associés à la valeur CLOS réservée (1520A), le circuit de gestion d'antémémoire (1475) devant ignorer les secondes copies de lignes d'antémémoire (1505B) dans la ou les régions non réservées de l'antémémoire (1470).

7. Procédé comprenant :
le stockage dans chaque registre d'une première pluralité de registres, d'une valeur de classe de service, CLOS, associée à un processeur logique correspondant d'une pluralité de processeurs logiques ;
le stockage dans chaque registre d'une seconde pluralité de registres d'une indication d'une partie d'une ressource partagée à attribuer à une valeur CLOS correspondante ;
le stockage dans un premier registre de contrôle d'un premier processeur logique du ou des processeurs logiques d'une valeur CLOS réservée associée à une structure de contrôle de confiance,
l'indication par micrologiciel ou logiciel sécurisé d'une partie réservée de la ressource partagée associée à la valeur CLOS réservée ; et
la limitation de l'accès à la partie réservée de la ressource partagée aux fils d'exécution ou processeurs logiques associés à la valeur CLOS réservée,
la ressource partagée comprenant une antémémoire et chaque valeur de masque comprenant une pluralité de bits correspondant à une pluralité de voies d'antémémoire, un bit de la pluralité de bits devant être défini à une première valeur pour indiquer qu'une voie d'antémémoire correspondante est attribuée à la valeur CLOS correspondante, et
le procédé comprenant en outre :
la gestion d'attributions et d'évictions de lignes d'antémémoire dans l'antémémoire, la gestion comprenant l'attribution de copies multiples de certaines lignes d'antémémoire, comprenant des premières copies des lignes d'antémémoire dans une région réservée de l'antémémoire associée à la valeur CLOS réservée et des secondes copies des lignes d'antémémoire dans une ou plusieurs régions non réservées de l'antémémoire associées à des valeurs CLOS non réservées.

8. Procédé selon la revendication 7, la seconde pluralité de registres comprenant une pluralité de registres de masque, chaque registre de masque de la pluralité de registres de masque étant destiné à stocker une valeur de masque indiquant une partie correspondante de la ressource partagée à attribuer à la valeur CLOS correspondante.

9. Procédé selon la revendication 8, un premier registre de la seconde pluralité de registres associés à la valeur CLOS réservée étant destiné à stocker une première valeur de masque pour indiquer une partie de la partie réservée de la ressource partagée attribuée à la valeur CLOS réservée.

10. Procédé selon la revendication 9, la partie réservée de la ressource partagée devant être utilisée pour stocker des données partagées au sein d'un domaine de confiance associé à la valeur CLOS réservée.

11. Support lisible par machine sur lequel est stocké un code de programme qui, lorsqu'il est exécuté par une machine, amène la machine à réaliser le procédé selon l'une quelconque des revendications 7 à 10.
